# NEUE EUROPÄISCHE PATENTSCHRIFT

(11) **EP 1 966 769 B2**
(45) Veröffentlichungstag und Bekanntmachung des Hinweises auf die Entscheidung über den Einspruch: **28.03.2018**
(45) Hinweis auf die Patenterteilung: 12.11.2014
(21) Anmeldenummer: 06829388.5
(22) Anmeldetag: 07.12.2006
(51) Int. Cl.: G07D 7/12, B42D 15/00

(54) **OPTISCH VARIABLES SICHERHEITSELEMENT UND VERFAHREN ZU SEINER HERSTELLUNG**
VISUALLY VARIABLE SECURITY ELEMENT, AND METHOD FOR PRODUCTION THEREOF
ELÉMENT DE SÉCURITÉ À VARIATION D'ASPECT ET SON PROCÉDÉ DE FABRICATION

(30) Priorität: 21.12.2005 DE 102005061749
(43) Veröffentlichungstag der Anmeldung: 10.09.2008
(73) Patentinhaber: Giesecke+Devrient Currency Technology GmbH, 81677 München (DE)
(72) Erfinder: RAHM, Michael, 93155 Hemau (DE); DICHTL, Marius, 81371 München (DE); HEIM, Manfred, 81543 München (DE)
(74) Vertreter: Zeuner Summerer Stütz
(86) Internationale Anmeldenummer: PCT/EP2006/011769
(87) Internationale Veröffentlichungsnummer: WO 2007/079851

(56) Entgegenhaltungen:
- WO-A-02/06858
- WO-A-02/091041
- WO-A1-02/00445
- WO-A1-02/48760
- WO-A1-02/091041
- WO-A1-2005/002873
- WO-A2-03/084766
- WO-A2-03/095657
- WO-A2-2005/101101
- WO-A2-2006/095161
- DE-A1- 2 555 214
- US-A- 4 856 857
- US-B1- 6 967 053
- ROBERT LEE: "Micro mirror array nanostructures for anti-counterfeiting applications" PROC. OF SPIE-IS&T ELECTRONIC IMAGING, Bd. 5310, 2004, Seiten 350-368, XP002422595
- LEECH ET AL: "Optically variable micro-mirror arrays fabricated by graytone lithography" MICROELECTRONIC ENGINEERING, ELSEVIER PUBLISHERS BV., AMSTERDAM, NL, Bd. 83, Nr. 2, Februar 2006 (2006-02), Seiten 351-356, XP005281676 ISSN: 0167-9317
- LEE R A: "Colourtone lithography", MICROELECTRONIC ENGINEERING, ELSEVIER PUBLISHERS BV., AMSTERDAM, NL, vol. 61-62, 1 July 2002 (2002-07-01), pages 105-111, XP004360522, ISSN: 0167-9317, DOI: 10.1016/S0167-9317(02)00520-8

## Beschreibung

Die Erfindung betrifft ein optisch variables Sicherheitselement zur Absicherung von Wertgegenständen, ein Verfahren zur Herstellung eines derartigen Sicherheitselements und einen mit einem solchen Sicherheitselement ausgestatteten Datenträger.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, eines Aufreißfadens für Produktverpackungen, eines aufgebrachten Sicherheitsstreifens, einer Abdeckfolie für eine Banknote mit Fenster oder eines selbsttragenden Transferelements ausgebildet sein, wie einem Patch oder einem Etikett, das nach seiner Herstellung auf ein Wertdokument aufgebracht wird.

Um die Nachstellung der Sicherheitselemente selbst mit hochwertigen Farbkopiergeräten zu verhindern, weisen diese vielfach optisch variable Elemente auf, die dem Betrachter unter unterschiedlichen Betrachtungswinkeln einen unterschiedlichen Bildeindruck vermitteln und etwa einen unterschiedlichen Farbeindruck oder unterschiedliche graphische Motive zeigen. Zu diesem Zweck werden die Sicherheitselemente beispielsweise mit Sicherheitsmerkmalen in Form beugungsoptisch wirksamer Mikro- oder Nanostrukturen ausgestattet, wie etwa mit konventionellen Prägehologrammen oder anderen hologrammähnlichen Beugungsstrukturen. Solche beugungsoptische Strukturen für Sicherheitselemente sind etwa in den Druckschriften EP 0 330 733 A1 oder EP 0 064 067 A1 beschrieben.

In dem Artikel R. A. Lee, "Colourtone lithography", Microelectronic Engineering 61-62 (2002), 105-111, ist ein Verfahren zum Herstellen von gepixelten Mikrostrukturarrays beschrieben, bei dem auf ein Papiersubstrat eine hochreflektierende Druckfarbe aufgebracht und mit einem Prägewerkzeug ein Mikrospiegelarray in die aufgebrachte Druckschicht eingeprägt wird.

Die optische Wirksamkeit von Hologrammen und hologrammartigen Beugungsstrukturen beruht nicht zuletzt auf der Farbaufspaltung beim Einfall polychromatischen Lichts auf die Beugungsstruktur. Das resultierende Farbspiel ist in den letzten Jahren allerdings so alltäglich geworden, dass seine Wirkung als attraktives Sicherheitsmerkmal bereits deutlich nachlässt. Der charakteristische visuelle Effekt wird von den Betrachtern vielfach nicht mehr als Sicherheitsmerkmal, sondern lediglich als Designvariante wahrgenommen, wodurch der Nutzen dieser Sicherheitsmerkmale für den Fälschungsschutz reduziert wird. Darüber hinaus lassen sich die beugungsoptisch erzeugten Bild- oder Farbeindrücke oft nur aus gewissen Betrachtungsrichtungen und bei guten Lichtverhältnissen vollständig und scharf erkennen. Insbesondere ist die Erkennbarkeit holographischer Motive bei schlechten Lichtverhältnissen, wie etwa bei diffuser Beleuchtung, oft stark eingeschränkt.

Ausgehend davon liegt der Erfindung die Aufgabe zugrunde, ein Sicherheitselement der eingangs genannten Art mit hoher Fälschungssicherheit anzugeben, das die Nachteile des Standes der Technik vermeidet. Insbesondere soll ein Sicherheitselement geschaffen werden, dessen optisch variable Effekte selbst bei widrigen Beleuchtungsverhältnissen noch gut erkennbar sind. Diese Aufgabe wird durch das Sicherheitselement und das Herstellungsverfahren mit den Merkmalen der unabhängigen Ansprüche gelöst. Weiterbildungen der Erfindung sind Gegenstand der Unteransprüche.

Gemäß der Erfindung enthält ein gattungsgemäßes optisch variables Sicherheitselement eine achromatisch reflektierende Mikrostruktur in Form eines Mosaiks aus einer Vielzahl achromatisch reflektierender Mosaikelemente, die durch die Parameter Größe, Umrissform, Reliefform, Reflexionsvermögen und räumliche Ausrichtung charakterisiert sind. Die Mosaikelemente bilden ein vorbestimmtes Motiv, indem verschiedene Gruppen von Mosaikelementen mit unterschiedlichen charakteristischen Parametern einfallendes Licht in unterschiedliche Raumbereiche reflektieren. Darüber hinaus weisen die Mosaikelemente eine laterale Abmessung unterhalb der Auflösungsgrenze des Auges auf.

Erfindungsgemäß weisen die Mosaikelemente laterale Abmessungen von weniger als 30 µm auf. Derart kleine Mosaikelemente lassen sich aufgrund der mit der geringen Größe verbundenen geringen Profiltiefe zum einen in etablierter Folientechnologie herstellen, zum anderen erschafft die geringe Elementgröße eine Vielzahl an möglichen Anordnungen für die Mosaikelemente, wie nachfolgend zusammen mit den jeweils verbundenen Vorteilen genauer geschildert.

Die Mosaikelemente weisen vorteilhaft laterale Abmessungen von mehr als 3 µm, vorzugsweise von mehr als 10 µm auf. Durch diese Abmessungen ist sichergestellt, dass wellenlängenabhängige Lichtbeugungseffekte zu vernachlässigen sind und dass das einfallende Licht von den Mosaikelementen ohne störende Farbeffekte achromatisch reflektiert wird.

Zweckmäßig weisen die Mosaikelemente eine quadratische, rechteckige, runde, ovale, wabenförmige oder polygonal begrenzte Umrissform auf. Die lateralen Abmessungen der Mosaikelemente betragen mit Vorteil in keiner Richtung mehr als das Fünffache der Abmessung in einer der anderen Richtungen.

Als Reflexionsschichten für die Mosaikelemente kommen Dünnschichtelemente mit Farbkippeffekt oder Schichten aus flüssigkristallinem Material, insbesondere aus cholesterischem flüssigkristallinem Material, in Betracht. Das Reflexionsvermögen der Mosaikelemente kann mithilfe von Mattstrukturen oder Mottenaugenstrukturen präzise auf einen gewünschten Wert zwischen 0 und einem vorbestimmten Maximalwert eingestellt werden.

In einer vorteilhaften Erfindungsvariante weisen die Mosaikelemente eine einfache Reliefform mit genau einer gegen die Oberfläche des Sicherheitselements geneigten Reflexionsfläche auf. Der Neigungswinkel der Reflexionsfläche der Mosaikelemente beträgt dabei zweckmäßig weniger als 90°, bevorzugt weniger als etwa 45°. Die Reflexionsfläche der Mosaikelemente kann flach oder auch konkav oder konvex gewölbt sein.

In anderen ebenfalls vorteilhaften Erfindungsvarianten weisen die Mosaikelemente Reliefformen mit zwei oder mehr in verschiedene Richtungen gegen die Oberfläche des Sicherheitselements geneigten Reflexionsflächen auf. Insbesondere können die Mosaikelemente eine Dachstruktur oder eine mehrseitige pyramidale Struktur aufweisen. Auch bei dieser Variante beträgt der Neigungswinkel der Reflexionsflächen der Mosaikelemente zweckmäßig weniger als 90°, vorzugsweise weniger als etwa 45°, und die Reflexionsflächen der Mosaikelemente können sowohl flach als auch konkav oder konvex gewölbt sein.

Gemäß einer weiteren vorteilhaften Erfindungsvariante bilden Mosaikelemente Retroreflektoren, also mehrfach reflektierende Strukturen, die aus einem gewissen Winkelbereich einfallendes Licht in die Einfallsrichtung zurückreflektieren. Insbesondere weisen die Mosaikelemente dabei eine Würfeleckstruktur mit einer Reliefform aus drei im Wesentlichen aufeinander senkrecht stehenden und einander zugewandten Reflexionsflächen auf. Die drei Reflexionsflächen definieren eine optische Achse, die für eine Würfeleckstruktur durch die Raumdiagonale des zugehörigen Würfels gegeben ist. Die so definierte optische Achse zeigt vorzugsweise für jedes Mosaikelement in eine vorgewählte Richtung, so dass ein oder mehrere Bildmotive dargestellt werden können, wie weiter unten genauer beschrieben.

Das Mosaik selbst stellt bevorzugt ein Rasterbild aus einer Mehrzahl von Bildpunkten dar, wobei jeder Bildpunkt durch ein oder mehrere achromatisch reflektierende Mosaikelemente gebildet ist. Die Helligkeit der Bildpunkte des Rasterbilds kann dabei durch einen oder mehrere der Parameter Größe, Umrissform, Reliefform, Reflexionsvermögen und räumliche Ausrichtung der Mosaikelemente des jeweiligen Bildpunkts bestimmt sein, oder auch durch die Anzahl der Mosaikelemente mit bestimmten charakteristischen Parametern in dem jeweiligen Bildpunkt.

Bei einer Weiterentwicklung des erfindungsgemäßen Sicherheitselements ist in der Anordnung der Mosaikelemente innerhalb eines Bildpunktes eine weitere Information codiert.

Erfindungsgemäß kann das Mosaik des Sicherheitselements auch zwei oder mehr unterschiedliche Bildmotive in unterschiedliche Raumbereiche reflektieren, so dass für den Betrachter bei entsprechender Bewegung des Sicherheitselements ein Kipp- oder Bewegungsbild entsteht. In einer anderen Gestaltung kann das Mosaik auch eine sich vergrößernde oder verkleinernde Umrisslinie eines Bildmotivs in unterschiedliche Raumbereiche reflektieren, so dass für den Betrachter bei entsprechender Bewegung des Sicherheitselements ein Pumpbild entsteht. Reflektiert das Mosaik zumindest zwei Ansichten eines Bildmotivs in unterschiedliche Raumbereiche, so entsteht für den Betrachter in einem vorgewählten Betrachtungsabstand ein Stereobild des Bildmotivs.

In allen beschriebenen Gestaltungen können die Parameter Größe, Umrissform, Reliefform, Reflexionsvermögen und räumliche Ausrichtung der Mosaikelemente so gewählt sein, dass eines oder alle der Motivbilder für den Betrachter bei ebener Ausrichtung des Sicherheitselements sichtbar sind. Diese Parameter können alternativ oder zusätzlich auch so gewählt sein, dass eines oder alle der Motivbilder für den Betrachter erst bei einer vorgewählten Verformung des Sicherheitselements erscheinen.

Neben den Ausführungsformen, bei denen der Betrachter das Sicherheitselement selbst betrachtet, kommen auch Gestaltungen infrage, bei denen die Parameter Größe, Umrissform, Reliefform, Reflexionsvermögen und räumliche Ausrichtung der Mosaikelemente so gewählt sind, dass das Sicherheitselement eines oder alle der Motivbilder bei vorgewählter Beleuchtung auf eine Auffangfläche vorgewählter Geometrie projiziert.

Die erfindungsgemäßen Sicherheitselemente können mit weiteren Sicherheitsmerkmalen kombiniert sein. Beispielsweise kann ein Sicherheitselement zusätzlich Informationen in Form von Mustern, Zeichen oder Codierungen aufweisen, die durch nichtreflektierende Bereiche innerhalb des Mosaiks gebildet sind. Auch können die achromatisch reflektierenden Mikrostrukturen mit holographischen oder hologrammähnlichen Beugungsstrukturen kombiniert, oder mit eingearbeiteten magnetischen Stoffen, mit eingearbeiteten phosphoreszierenden, fluoreszierenden oder sonstigen lumineszierenden Stoffen, mit gezielt eingestellter Leitfähigkeit, insbesondere durch eine gezielt eingestellte Dicke einer metallischen Reflexionsschicht, mit Farbkippeffekten oder gefärbtem Prägelack und dergleichen versehen sein.

Die Erfindung enthält auch ein Verfahren zum Herstellen eines Sicherheitselements der beschriebenen Art, bei dem das Oberflächenprofil der Mikrostruktur in eine Lackschicht geprägt wird, und die geprägte Lackschicht mit einer Reflexionsschicht beschichtet wird. Das Oberflächenprofil wird dabei bevorzugt in eine UV-härtbare Lackschicht geprägt und die Lackschicht nach der Prägung ausgehärtet. Um eine Abformung und unerwünschte Vervielfältigung des Oberflächenprofils zu verhindern, wird die Reflexionsschicht vorzugsweise durch eine transparente Deckschicht, beispielsweise eine UV-Lackschicht, abgedeckt. Diese Abdeckung kann beispielsweise durch die Prägelackschicht selbst erfolgen.

Das erfindungsgemäße Oberflächenprofil der Mikrostruktur kann grundsätzlich in alle bekannten Materialien eingebracht werden, die dem Prägeverfahren zugänglich sind. Neben den bereits erwähnten und bevorzugten UVhärtbaren Lacken können deshalb z. B. auch thermoplastische Prägelacke Verwendung finden. Als thermoplastische Prägelacke kommen z. B. thermoplastische Kunststoffmaterialien in Betracht, in die mittels eines geeigneten Prägewerkzeugs unter Einwirken von Wärme das erfindungsgemäße Oberflächenprofil eingeprägt wird. Sehr verbreitet sind z. B. thermoplastische Kunststoffe, die mittels einer Nickelmatrize als Prägewerkzeug bei einer Temperatur von ca. 130 °C mit der erfindungsgemäßen Mikrostruktur versehen werden.

Die Erfindung umfasst weiter einen Datenträger, insbesondere ein Wertdokument, wie eine Banknote, eine Ausweiskarte oder dergleichen, der mit einem Sicherheitselement der beschriebenen Art ausgestattet ist.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit einem eingebetteten Sicherheitsfaden und einem aufgeklebten Transferelement,
- Fig. 2: eine schematische Darstellung zur Erläuterung des Prinzips erfindungsgemäßer Sicherheitselemente;
- Fig. 3: den Schichtaufbau einer erfindungsgemäßen Sicherheitsfolie vor dem Applizieren auf ein Substrat,
- Fig. 4: den Schichtaufbau eines erfindungsgemäßen Sicherheitsfadens im Querschnitt,
- Fig. 5: in (a) bis (g) verschiedene Ausgestaltungen erfindungsgemäßer Mikrospiegel,
- Fig. 6: in (a) ein Sicherheitselement mit zwei aus unterschiedlichen Betrachtungsrichtungen sichtbaren Bildmotiven, in (b) die zugehörige Aufteilung der Bildfläche in Teilflächen, und in (c) ein Sicherheitselement mit einem Bewegungsbild,
- Fig. 7, 8: Sicherheitselemente mit in der Anordnung der Mikrospiegel codierten weiteren Informationen nach Ausführungsbeispielen der Erfindung,
- Fig. 9: ein erfindungsgemäßes Sicherheitselement in Form eines Etiketts,
- Fig. 10: ein flexibles Dokument mit einem optisch variablen Sicherheitselement mit "Krümmungs-Flip-Effekt" nach einem weiteren Ausführungsbeispiel der Erfindung,
- Fig. 11: eine Banknote mit einem erfindungsgemäßen Sicherheitselement, das bei geeigneter Beleuchtung ein gewünschtes Bildmotiv auf einen Auffangschirm projiziert,
- Fig. 12: einen Querschnitt durch eine achromatisch reflektierende Mikrostruktur, deren Mosaikelemente durch Retroreflektoren gebildet sind,
- Fig. 13: eine schematische Darstellung zur Erläuterung der Begrenzung des Retroreflexionseffekts,
- Fig. 14: ein Sicherheitselement mit Würfeleckelementen nach einem weiteren Ausführungsbeispiel der Erfindung, und
- Fig. 15: die geometrischen Verhältnisse bei der Betrachtung des Sicherheitselements der Fig. 14.

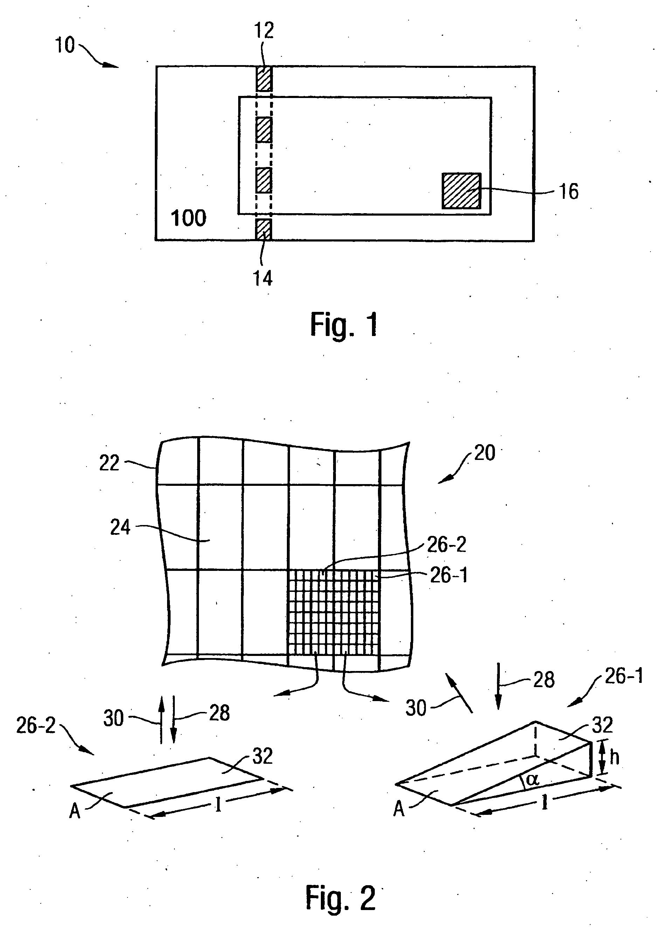

Die Erfindung wird nun am Beispiel einer Banknote erläutert. Fig.1 zeigt dazu eine schematische Darstellung einer Banknote 10, die mit zwei Sicherheitselementen 12 und 16 mit achromatisch reflektierenden Mikrostrukturen jeweils nach einem Ausführungsbeispiel der Erfindung ausgestattet ist. Das erste Sicherheitselement stellt dabei einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet.

Das Prinzip erfindungsgemäßer Sicherheitselemente wird nun mit Bezug auf die schematische Darstellung der Fig. 2 erläutert. Das Sicherheitselement 20 enthält ein Rasterbild 22 aus einer Mehrzahl von Bildpunkten 24, wobei jeder Bildpunkt 24 eine Mehrzahl achromatisch reflektierender Mikrospiegel 26-1, 26-2 enthält, wie für zwei der Bildpunkte 24 in Fig. 2 angedeutet. Die Mikrospiegel sind durch die Parameter Größe, Umrissform, Reliefform, Reflexionsvermögen und räumliche Ausrichtung charakterisiert und reflektieren einfallendes Licht 28 entsprechend den Vorgaben dieses Parametersatzes jeweils in einen bestimmten Raumbereich 30.

Beispielsweise weisen die Mikrospiegel 26-1 und 26-2 der Fig. 2 jeweils eine quadratische Grundfläche A, mithin eine quadratische Umrissform, und eine laterale Ausdehnung von 15 x 15 µm² auf. Die Mikrospiegel haben darüber hinaus eine einfache Reliefform mit einer einzigen, flachen Reflexionsfläche 32, die einen bestimmten Neigungswinkel α mit der Oberfläche des Sicherheitselements einschließt.

In ersten Bildpunkten liegen dabei Mikrospiegel 26-1 einer ersten Art vor, bei denen die Reflexionsfläche 32 einen Neigungswinkel von α = 30° zur Oberfläche des Sicherheitselements aufweist. Bei einer lateralen Ausdehnung von 1=15 µm ergibt sich bei diesem Neigungswinkel eine Strukturhöhe h von h = ¹*tan(α) = 8,7 µm für die Mikrospiegel 26-1. In zweiten Bildpunkten liegen Mikrospiegel 26-2 einer zweiten Art vor, deren Reflexionsfläche 32 nicht gegen die Oberfläche des Sicherheitselements geneigt ist (ausgedrückt durch Neigungswinkel α = 0°).

Wird das Sicherheitselement 20 nun aus der Raumrichtung betrachtet, in die die ersten Mikrospiegel 26-1 reflektieren, so erscheinen die Bildpunkte mit den ersten Mikrospiegeln 26-1 hell, die Bildpunkte mit den zweiten Mikrospiegeln 26-2 dagegen dunkel, so dass entsprechend der Anordnung der Bildpunkte 24 ein "schwarz-weißes" Rasterbild mit dem gewünschten Bildinhalt entsteht.

Bei den gewählten Abmessungen der Mikrospiegel 26-1, 26-2 ist einerseits sichergestellt, dass die Mikrospiegel so klein sind, dass sie vom bloßen Auge nicht aufgelöst werden können, dass somit jeder Bildpunkt 24 für den Betrachter als einheitliche Fläche erscheint. Andererseits sind die Mikrospiegel so groß, dass wellenlängenabhängige Lichtbeugungseffekte zu vernachlässigen sind. Das einfallende Licht wird daher von den Mikrospiegeln 26-1, 26-2 ohne störende Farbeffekte achromatisch reflektiert.

Die Bildpunkte der Rasterbilder sind im einfachsten Fall mit jeweils gleichartigen Mikrospiegeln gefüllt. Beispielsweise können die Rasterpunkte jeweils eine Größe von 100 µm x 100 µm aufweisen und 100 Mikrospiegel mit einer Grundfläche von 10 µm x 10 µm enthalten. "Dunkle" Bildpunkte können auch durch eine zufällige Ausrichtung der einzelnen Mikrospiegel in diesem Bildpunkt erreicht werden, da dadurch weniger Licht in die von anderen Bildpunkten bevorzugten Raumrichtungen gelenkt wird.

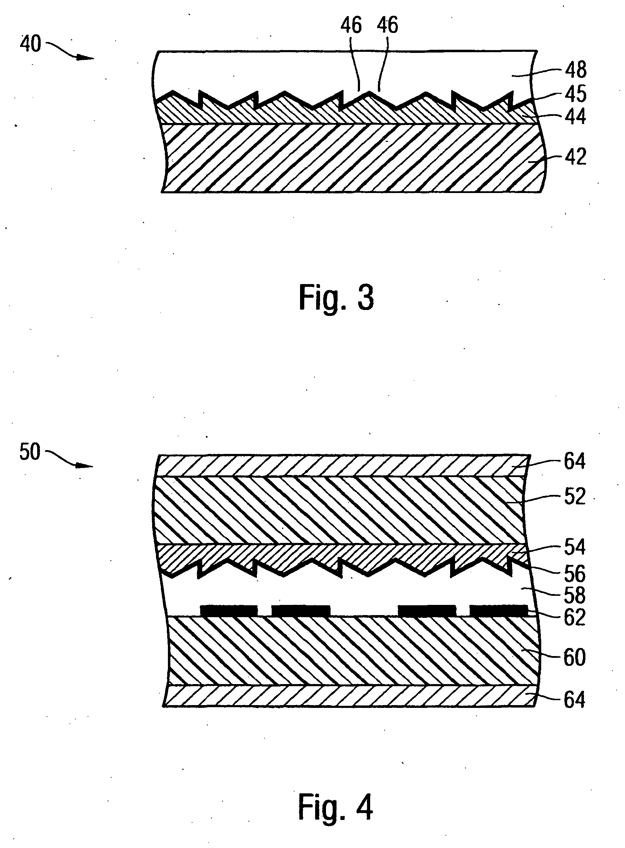

Die Herstellung von Sicherheitselementen mit Oberflächenprofilen, die derartige Mikrospiegel enthalten, stellt hohe Anforderungen an den Produktionsprozess. Fig. 3 zeigt zur Erläuterung den Schichtaufbau einer erfindungsgemäßen Sicherheitsfolie 40 mit einer achromatisch reflektierenden Mikrospiegelstruktur vor dem Applizieren auf ein Substrat.

Zur Herstellung der Sicherheitsfolie 40 wird eine lichtempfindliche UV-Lackschicht 44 homogen auf eine Trägerfolie 42 aufgebracht und in der Form des gewünschten Oberflächenreliefs geprägt. Anschließend wird die geprägte Lackschicht durch Bestrahlung mit UV-Licht gehärtet und eine lichtreflektierende Metallschicht 45, beispielsweise eine 40 nm dicke Aluminiumschicht aufgebracht. Sofern ein thermoplastisches Material anstelle der UV-Lackschicht 44 eingesetzt wird, wird das Oberflächenrelief bei einer erhöhten Temperatur, z. B. 130 °C, in dem Thermoplasten abgeformt und das thermoplastische Material nach dem Aushärten mit der lichtreflektierenden Metallschicht 45 versehen.

Die fertige Struktur wird dann über eine Klebeschicht 48 auf ein in Fig. 3 nicht dargestelltes Substrat appliziert und die Trägerfolie 42 anschließend entfernt. Die spiegelnde Metallschicht 45 ist dann durch den UV-Lack 44 abgedeckt, was dem Schutz der geprägten Oberflächenstruktur vor Abformung und unerwünschter Vervielfältigung dient. Darüber hinaus führt der im Vergleich zur umgebenden Luft höhere Brechungsindex der Lackschicht dazu, dass der für eine bestimmte Ablenkung des einfallenden Lichts erforderliche Neigungswinkel α geringer als bei unbedeckten Spiegelflächen gewählt werden kann. Daher kann auch die Profilhöhe h kleiner gewählt werden, was den Herstellungsprozess erleichtert.

Wie aus Fig. 3 zu erkennen, enthält das dort gezeigte Oberflächenrelief zwei Arten von Mikrospiegeln 46 mit gleichem Neigungswinkel α, aber unterschiedlicher räumlicher Orientierung. Bei senkrechter Betrachtung des Sicherheitselements und bei geeigneter Beleuchtung erscheinen beide Mikrospiegelarten beispielsweise gleich hell. Kippt der Betrachter das Sicherheitselement nach rechts oder links, so tritt das von den Mikrospiegeln 46 gebildete Bildmotiv einmal in Positivdarstellung und einmal in Negativdarstellung hervor.

Das Ausführungsbeispiel der Fig. 4 zeigt den Schichtaufbau eines Sicherheitsfadens 50 mit einer achromatisch reflektierenden Mikrospiegelstruktur. Zur Herstellung des Sicherheitsfadens 50 wird eine UV-Lackschicht 54 auf eine PET-Folie 52 aufgebracht, in Form des gewünschten Oberflächenreliefs geprägt, gehärtet und mit einer reflektierenden Metallschicht 56 versehen. Die so erhaltene Schichtstruktur wird dann mittels eines Kaschierklebers 58 auf eine zweite PET-Folie 60 aufkaschiert, die mit einem maschinenlesbaren Sicherheitsmerkmal in Form von Magnetstreifen 62 ausgestattet ist. Abschließend wird der Sicherheitsfaden beiderseitig mit Heißsiegellack 64 beschichtet.

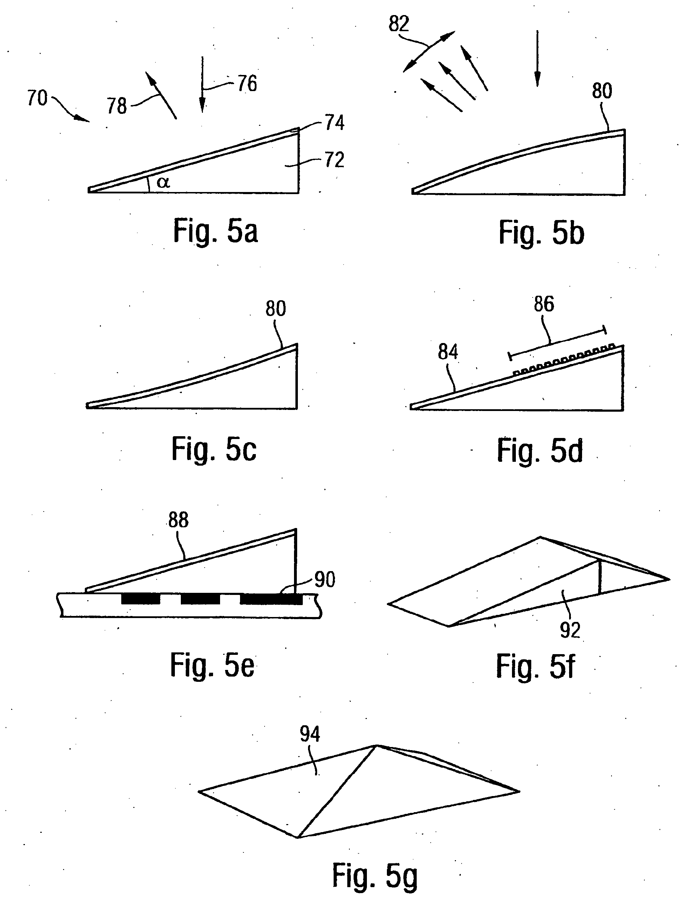

Die Mikrospiegel können erfindungsgemäß in einer Vielzahl von Ausgestaltungen ausgebildet werden, um das einfallende Licht in unterschiedlichem Ausmaß in unterschiedliche Raumbereiche zu reflektieren, wie mit Bezug auf Fig. 5 gezeigt.

Der in Fig. 5(a) im Querschnitt dargestellte Mikrospiegel 70 entspricht der in den Figuren 2 bis 4 verwendeten Gestalt, bei der ein Grundkörper 72 genau eine, gegen die Oberfläche des Sicherheitselements geneigte Reflexionsfläche 74 aufweist. Der Grundkörper 72 wird typischerweise von einer geprägten Lackschicht gebildet, die Reflexionsfläche 74 durch eine aufgebrachte Metallschicht. Der Neigungswinkel α liegt erfindungsgemäß vorzugsweise zwischen 0° und etwa 45°, so dass der Winkel 2α zwischen der einfallenden Strahlung 76 und der reflektierten Strahlung 78 zwischen 0° und etwa 90° liegt. Beispielsweise liegt der Neigungswinkel α bei etwa 35°.

Die Reflexionsfläche kann, wie in Fig. 5(a), flach ausgebildet sein, oder, wie die Reflexionsfläche 80 der Fig. 5(b), auch konvex gewölbt sein, um den Raumwinkelbereich 82, aus dem die reflektierte Strahlung zu erkennen ist, zu vergrößern. Daneben kann die Reflexionsfläche, wie in Fig. 5(c), auch konkav gewölbt sein.

Das Reflexionsvermögen der Mikrospiegel kann durch die Wahl der reflektierenden Beschichtung in weitem Rahmen eingestellt werden. Insbesondere kann die Helligkeit der reflektierten Strahlung durch Mattstrukturen oder andere Maßnahmen auf der Reflexionsfläche gezielt beeinflusst werden. Beispielsweise zeigt Fig. 5(d) einen Mikrospiegel, dessen Reflexionsfläche 84 in einem Bereich 86 mit einer so genannten Mottenaugenstruktur belegt ist, also mit einer Struktur aus "Noppen", die die Reflexion in dem belegten Bereich 86 wirkungsvoll unterdrücken. Die charakteristischen Abmessungen der Noppen liegen dabei zweckmäßig zwischen nur wenigen Nanometern bis zu wenigen 100 Nanometern. Entsprechend dem Anteil der Mattstrukturen oder der Mottenaugenstrukturen an der Gesamtfläche der Reflexionsfläche 84 kann das Reflexionsvermögen praktisch stufenlos auf einen Wert zwischen 0 und einem gewissen Maximalwert eingestellt werden. Die Mikrospiegel können so beliebige "Grauwerte" innerhalb eines Bildmotivs darstellen.

Wie in Fig. 5(e) gezeigt, können als Reflexionsschichten auch transparente, hochbrechende Schichten 88 eingesetzt werden, so dass eine unterhalb der Mikrospiegel auf das Sicherheitselement aufgebrachte Information, wie etwa ein Aufdruck 90, sichtbar bleibt.

Statt eines einfachen Profils können die Mikrospiegel auch eine komplexere Reliefform mit zwei oder mehr in verschiedene Richtungen gegen die Oberfläche des Sicherheitselements geneigten Reflexionsflächen aufweisen, wie etwa die in Fig. 5(f) gezeigte Dachform 92 oder die in Fig. 5(g) gezeigte mehrseitige pyramidale Reliefform 94. Es versteht sich, dass die Reflexionsflächen auch bei diesen komplexeren Profilformen gewölbt und/oder in ihrem Reflexionsgrad verändert sein können.

Um aus Mikrospiegeln als Mosaikelementen ein vorbestimmtes Motiv zu bilden, kann im einfachsten Fall wie bereits in Zusammenhang mit Fig. 2 beschrieben vorgegangen werden. Das Mikrospiegelmosaik kann erfindungsgemäß allerdings auch zwei oder mehr verschiedene Bildmotive in unterschiedliche Raumbereiche reflektieren, so dass für den Betrachter bei entsprechender Bewegung des Sicherheitselements ein Kipp- oder Bewegungsbild entsteht.

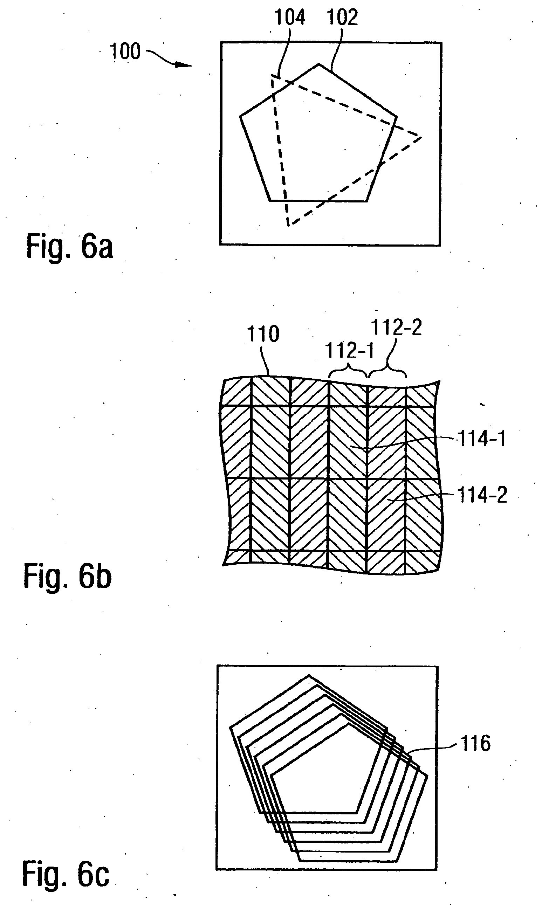

Sollen bei einem Sicherheitselement 100 etwa, wie in Fig. 6(a) angedeutet, zwei Bildmotive 102 bzw. 104 aus unterschiedlichen Betrachtungsrichtungen sichtbar sein, so wird die zur Verfügung stehende Bildfläche 110 so aufgeteilt, dass jedem der zu erzeugenden Einzelmotive Teilflächen 112-1 bzw. 112-2 zugewiesen sind, in denen die Bildpunkte 114-1 bzw. 114-2 für dieses Einzelmotiv angeordnet sind, siehe Fig. 6(b). Die Teilflächen 112-1, 112-2 sind dabei in zumindest einer Dimension mit einer Ausdehnung unterhalb der Auflösungsgrenze des Auges ausgeführt und daher für den Betrachter ohne Hilfsmittel nicht als Teilflächen erkennbar. Typischerweise sind die Teilflächen 112-1, 112-2 bei einer maximalen Ausdehnung von weniger als 300 µm streifenförmig (wie in Fig. 6(b)) oder rechteckig ausgebildet. Es versteht sich jedoch, dass auch beliebige andere Umrissformen für die Teilflächen in Betracht kommen.

Statt eines Kippbildes mit zwei Bildmotiven kann das Motiv auch ein Bewegungsbild aus mehreren Teilbildern 116 enthalten, die bei entsprechender Bewegung des Sicherheitselements nacheinander sichtbar werden und so die Illusion eines bewegten Bildmotivs vermitteln, wie in Fig. 6(c) angedeutet. Die gesamte Bildfläche wird dazu analog zu der Vorgehensweise der Fig. 6(b) in die entsprechende Anzahl an Teilflächen aufgeteilt, die jeweils die Bildpunkte für eines der Teilbilder 116 enthalten.

Weitere Varianten solcher aus mehreren Teilbildern zusammengesetzter Motive sind in der Druckschrift WO 2005/038500 A1 beschrieben, deren Offenbarung insoweit in die vorliegende Beschreibung aufgenommen wird. In dieser Druckschrift sind auch jeweils vorteilhafte Aufteilungen der Bildfläche in Teilflächen genannt, wobei die Teilflächen bei der Übertragung der Aufteilungen auf den Gegenstand der vorliegenden Anmeldung selbstverständlich mit einem Mikrospiegelmosaik statt mit Beugungsstrukturen zu füllen sind.

Die geringe Größe der einzelnen Mikrospiegel ermöglicht eine große Zahl an Variationsmöglichkeiten, wie die gesamte Bildfläche in Teilflächen, Bildpunkte und letztendlich das Mikrospiegelmosaik aufgeteilt werden kann. Da ein Bildpunkt typischerweise eine große Anzahl an Mikrospiegeln enthält, kann insbesondere in der konkreten Anordnung der Mikrospiegel innerhalb der Bildpunkte eine weitere Information codiert werden, die dem Betrachter ohne Hilfsmittel nicht zugänglich ist. Diese weitere Information kann daher als zusätzliches Sicherheitsmerkmal eingesetzt werden.

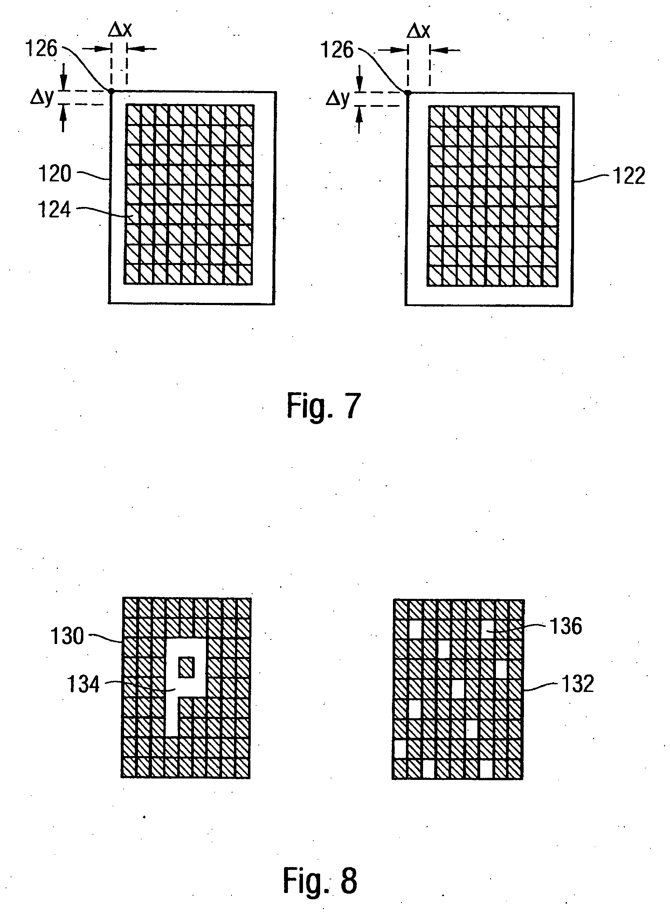

Zwei Beispiele für die Codierung solcher zusätzlicher Informationen sind in den Figuren 7 und 8 dargestellt.

Bei der Erfindungsvariante der Fig. 7 sind die Mikrospiegelelemente jeweils in Form eines Arrays innerhalb eines Bildpunktes angeordnet, dessen Fläche etwas größer als die Gesamtfläche des Mikrospiegelarrays ist. Die weitere Information ist dabei in der relativen Position des Mikrospiegelarrays innerhalb des Bildpunktes codiert, ohne dass diese Codierung einen Einfluss auf das Erscheinungsbild des Sicherheitselements bei normaler Betrachtung hätte.

Zur Illustration sind in Fig. 7 zwei Bildpunkte 120 und 122 jeweils mit einem 9 x 9-Array von Mikrospiegeln 124 gezeigt. Die Mikrospiegel 124 weisen jeweils eine Grundfläche von 10 µm x 15 µm auf, die Größe der Bildpunkte 120,122 übersteigt mit 115 µm x 160 µm die Gesamtgröße des Mikrospiegelarrays in x- und y-Richtung jeweils um 25 µm.

Das linke obere Eck der Bildpunkte 120,122 stellt einen Bezugspunkt 126 für die Auswertung der Position der Mikrospiegelarrays dar. Das linke obere Eck der Mikrospiegelarrays befindet sich nun erfindungsgemäß nicht im Bezugspunkt 126, sondern ist um einen gewissen Wert (Δx, Δy) gegen diesen Bezugspunkt versetzt. Wie aus Fig. 7 zu erkennen, beträgt dieser Versatz bei dem Bildpunkt 120 beispielsweise (Δx, Δy) = (10 µm, 10 µm), während er bei dem Bildpunkt 122 (Δx, Δy) = (15 µm, 10 µm) beträgt. Zwei weitere in der Figur nicht dargestellte Arten von Bildpunkten weisen einen Versatz von (Δx, Δy) = (10 µm, 15 µm) bzw. von (Δx, Δy) = (15 µm, 15 µm) auf. Durch diese vier möglichen Anordnungen des Mikrospiegelarrays innerhalb der Bildpunkte können pro Bildpunkt zusätzlich 2 Bit codiert werden. Die gewählten Größenordnungen des Versatzes stellen zudem sicher, dass in keiner Aufeinanderfolge von Bildpunkten zu geringe Abstände zwischen den Mikrospiegeln auftreten, die zu unerwünschten Beugungseffekten führen könnten.

Ein zweites Beispiel ist in Fig. 8 illustriert. Dort sind in zumindest einigen der Bildpunkte einzelne Mikrospiegel optisch unwirksam gemacht. Dies kann beispielsweise dadurch geschehen, dass innerhalb einer Gruppe von Mikrospiegeln mit einem bestimmten Neigungswinkel flache Mikrospiegel (Neigungswinkel 0) oder Mikrospiegel mit einem anderen Neigungswinkel in das Oberflächenrelief eingefügt werden. In anderen Ausgestaltungen ist das Reflexionsvermögen der optisch unwirksamen Mikrospiegel beispielsweise durch Mattstrukturen oder Mottenaugenstrukturen stark reduziert.

Während bei Bildpunkten einer ersten Art 132 eine Anzahl zufällig ausgewählter Mikrospiegel 136 optisch unwirksam gemacht ist, geschieht dies bei Bildpunkten der zweiten Art 130 in regelmäßiger Form 134, wie etwa in Gestalt des Buchstabens "P". Da die Anzahl der optisch wirksamen Mikrospiegel in beiden Bildpunkten gleich groß ist, erscheinen sie dem Betrachter gleich hell. Erst mithilfe geeigneter Vergrößerungsgeräte kann die mikrocodierte Information 134 sichtbar gemacht werden.

Bei den bisher beschriebenen Ausführungsbeispielen wurde stillschweigend vorausgesetzt, dass sich die achromatisch reflektierenden Mikrostrukturen auf ebenen Substraten befinden. Die erfindungsgemäßen Gestaltungen können jedoch auch bei gekrümmten oder flexiblen Substraten, wie etwa Etiketten, Wertpapieren oder Banknoten vorteilhaft eingesetzt werden.

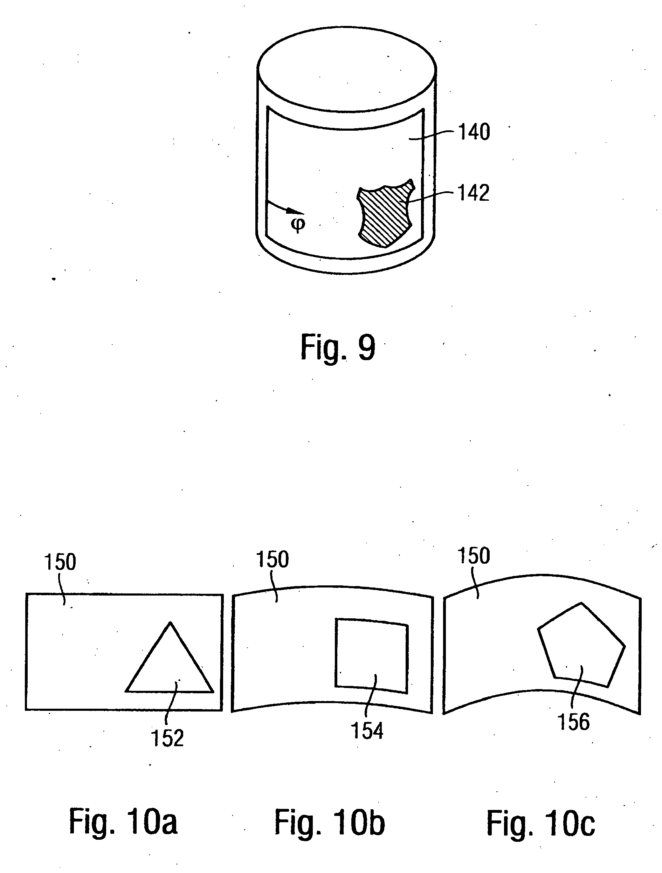

Eine Anwendung eines erfindungsgemäßen Sicherheitselements als Etikett 140, wie es beispielsweise bei Flaschen oder Dosen für hochpreisige Lebensmittel zum Einsatz kommen kann, ist in Fig. 9 gezeigt. Das Sicherheitselement 140 enthält eine Mehrzahl von Mikrospiegeln, die in Form eines Wappens 142 angeordnet sind. Die Mikrospiegel können eine einfache Reliefform mit einer einzigen, gegen die Oberfläche des Etiketts geneigten Reflexionsebene aufweisen. Die charakteristischen Parameter der Mikrospiegel sind im Ausführungsbeispiel so gewählt, dass bei Beleuchtung des Sicherheitselements von schräg oben alle Mikrospiegel des Wappens 142 die einfallende Strahlung senkrecht nach vorne reflektieren. Da die Strahlung dabei unter verschiedenen Einfallswinkeln auf das Etikett 140 auftrifft, weisen die Mikrospiegel an verschiedenen Orten entlang des Umfangs entsprechend unterschiedliche Neigungswinkel ihrer Reflexionsfläche α = α(ϕ) auf. Schwenkt man die Flasche oder Dose mit dem Sicherheitselement 140 in der Hand hin und her, so leuchtet in einer bestimmten Stellung das zuvor unauffällige Wappen 142 hell auf.

Je nach Form der gekrümmten Fläche und dem gewünschten Effekt bei Betrachtung des Sicherheitselements kann es erforderlich sein, neben dem Neigungswinkel auch die Neigungsrichtung der Reflexionsebene ortsabhängig zu machen. Es versteht sich, dass auch bei diesen Gestaltungen zwei oder mehr Bildmotive in verschiedene Raumrichtungen abgelenkt werden können, um ein Kippbild, ein Bewegungsbild oder dergleichen zu erzeugen.

Fig.10 zeigt ein weiteres Ausführungsbeispiel der Erfindung, bei dem ein flexibles Dokument 150 mit einem optisch variablen Sicherheitselement mit "Krümmungs-Flip-Effekt" ausgestattet ist. Je nach Krümmungszustand des Dokuments 150 treten unterschiedliche Bildmotive 152,154 bzw. 156 in Erscheinung. Analog zu den weiter oben beschriebenen Gestaltungen wird dazu die gesamte Bildfläche des Sicherheitselements in mehrere, im Ausführungsbeispiel in drei, Teilflächen aufgeteilt. Die erste Teilfläche wird mit Bildpunkten für das Bildmotiv 152 des flachen Zustands des Dokuments belegt, wie in Fig. 10(a) dargestellt. Die zweite Teilfläche wird mit Bildpunkten für das Bildmotiv 154 eines ersten, in Fig.10(b) gezeigten Krümmungszustands des Dokuments belegt, indem die Mikrospiegel dieser Teilfläche mit entsprechenden ortsabhängigen Neigungswinkeln und/oder Neigungsrichtungen ausgebildet werden. Analog wird die dritte Teilfläche mit Bildpunkten für das Bildmotiv 156 eines zweiten, in Fig.10(c) gezeigten Krümmungszustands des Dokuments belegt. Wird das Dokument nun beispielsweise zwischen Daumen und den Fingern einer Hand gekrümmt und entspannt, wechselt der Bildeindruck des Sicherheitselements von Fig.10(a) nach 10(c) und zurück.

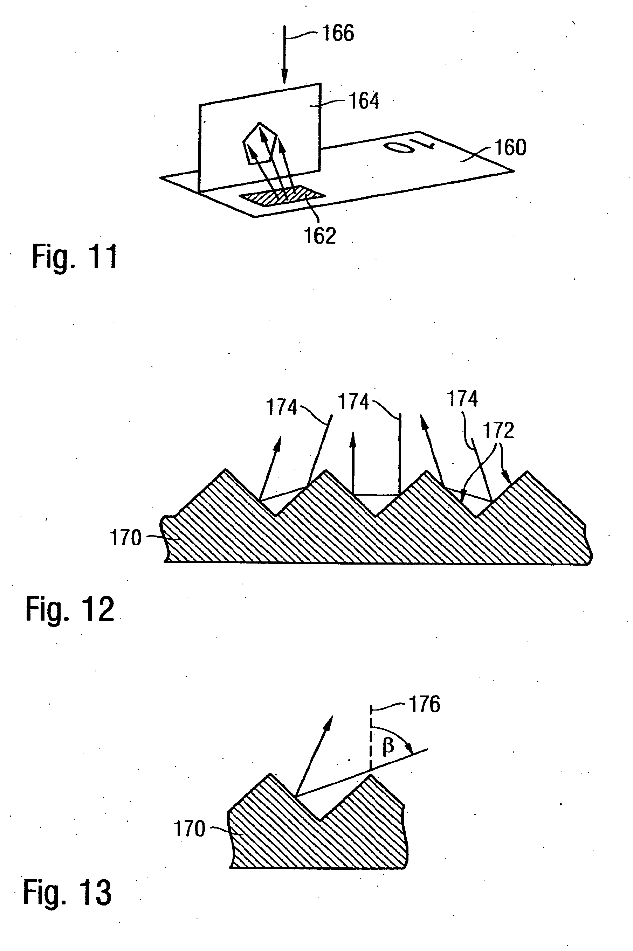

Neben der bisher behandelten direkten Betrachtung der Sicherheitselemente kommen auch Gestaltungen infrage, bei denen der Betrachter nicht die mit den Mikrostrukturen versehene Bildfläche selbst betrachtet, sondern einen Auffangschirm geeigneter Geometrie, auf den die Mikrostruktur bei geeigneter Beleuchtung das gewünschte Bildmotiv projiziert. Fig.11 zeigt zur Illustration eine Banknote 160 mit einem erfindungsgemäßen Sicherheitselement mit einem Mikrospiegelarray 162. Das Mikrospiegelarray 162 ist dabei für die Projektion auf einen senkrecht zur Banknote 160 angeordneten Auffangschirm 164 ausgelegt. Die charakteristischen Parameter der Mikrospiegel 162 sind daher so gewählt, dass sie das vorgewählte Motiv bei senkrechter Beleuchtung 166 unverzerrt auf einen derartigen Auffangschirm 164 projizieren.

Bei der gezeigten Gestaltung kann das projizierte Motiv auch bei einem etwas verschobenen oder verkippten Auffangschirm - wenn auch lichtschwächer oder verzerrt - erkannt werden. In anderen Gestaltungen können die Mikrospiegel auch so aufeinander abgestimmt sein, dass sich die reflektierten Strahlen beabstandeter Mikrospiegel in bestimmten Punkten schneiden, so dass das in dem Mikrospiegelarray 162 codierte Motiv nur mit einem Auffangschirm passender Geometrie in einem festen, vorbestimmten Abstand ausgelesen werden kann.

In einer weiteren Gestaltung können auch mehrere, räumlich nicht zusammenhängende Mikrospiegelarrays für die Projektion eines gemeinsamen Bildmotivs auf einem Auffangschirm ausgelegt sein. Je nach Anordnung der einzelnen Mikrospiegelarrays kann dabei die Abschirmung bzw. Zerstörung eines der Mikrospiegelarrays zu einer homogenen Abschwächung der Leuchtkraft des Bildmotivs führen oder es können einige Teilflächen des projizierten Bildmotivs vollständig verschwinden, während die anderen unverändert bleiben.

In weiteren Ausgestaltungen der Erfindung bilden die Mosaikelemente der achromatisch reflektierenden Mikrostruktur Retroreflektoren mit einer Würfeleckstruktur, also einer Reliefform 170 mit drei im Wesentlichen aufeinander senkrecht stehenden und einander zugewandten Reflexionsflächen 172, von denen in der Querschnittsdarstellung der Fig. 12 zwei gezeigt sind. Aus einem bestimmten Raumwinkelbereich auftreffende Strahlung 174 wird von derartigen retroreflektierenden Mosaikelementen in die Einfallsrichtung zurückreflektiert.

Jedes der Würfeleckelemente weist eine optische Achse 176 auf, die durch die Raumdiagonale des zugehörigen Würfels gegeben ist. Wie in Fig. 13 illustriert, versagt der Mechanismus der Mehrfachreflexion, auf dem der Retroreflexionseffekt beruht, wenn der Einfallswinkel β zur optischen Achse 176 einen gewissen Schwellenwinkel überschreitet. Mit anderen Worten findet Retroreflexion nur in einem bestimmten Raumwinkelbereich δψ um die optische Achse 176 statt.

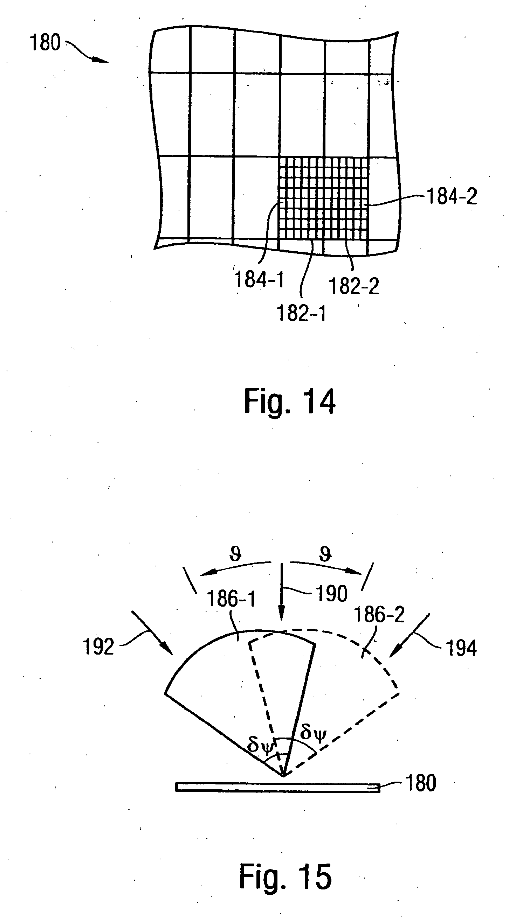

Dies wird bei dem erfindungsgemäßen Sicherheitselement 180 gemäß Fig. 14 ausgenutzt, indem die Bildpunkte, die zu unterschiedlichen Motiven gehören, mit Würfeleckelementen gefüllt werden, deren optische Achsen unterschiedlich im Raum ausgerichtet sind. Sollen beispielsweise zwei Motive dargestellt werden, so kann die optische Achse der ersten Würfeleckelemente 184-1 in den ersten Bildpunkten 182-1 um einen gewissen Winkel θ gegen die Senkrechte in eine erste Raumrichtung gekippt sein, während die optische Achse der zweiten Würfeleckelemente 184-2 der zweiten Bildpunkte 182-2 um einen anderen Winkel und/ oder in eine andere Raumrichtung gekippt ist. Im Ausführungsbeispiel ist die optische Achse der zweiten Würfeleckelemente 184-2 um denselben Winkel θ in die der ersten Raumrichtung gegenüberliegende Richtung gekippt, wie in Fig. 15 gezeigt. Dunkle Bildpunkte beider Motive können durch Bildpunkte ohne Würfeleckelemente oder durch Spiegelflächen mit Mattstrukturen oder Mottenaugenstrukturen gebildet werden.

Unter diesen Voraussetzungen kann Retroreflexion der ersten Würfeleckelemente 184-1 in einem Raumwinkelbereich 186-1 um die erste Raumrichtung, Retroreflexion der zweiten Würfeleckelemente 184-2 in einem Raumwinkelbereich 186-2 um die zweite Raumrichtung beobachtet werden.

Wird das Sicherheitselement 180 nun aus einer Richtung 190 betrachtet, die innerhalb beider Raumwinkelbereiche 186-1 und 186-2 liegt, so erscheinen bei geeigneter Beleuchtung, d.h. bei Beleuchtung aus einer mit der Betrachtungsrichtung übereinstimmenden Richtung, sowohl die Bildpunkte 182-1 des ersten Motivs als auch die Bildpunkte 182-2 des zweiten Motivs hell, da die Bedingung für Retroreflexion für beide Arten von Würfeleckelementen 184-1,184-2 erfüllt ist. Die beiden Motive können aus dieser Betrachtungsrichtung somit nicht getrennt erkannt werden.

Betrachtet man das Sicherheitselement 180 dagegen aus einer Richtung 192, die innerhalb des Raumwinkelbereichs 186-1 aber außerhalb des Raumwinkelbereichs 186-2 liegt, so erscheinen die Bildpunkte 182-1 des ersten Motivs hell, die Bildpunkte 182-2 des zweiten Motivs dagegen dunkel, da die Bedingung für Retroreflexion nur für die ersten Würfeleckelemente 184-1 erfüllt ist. In diesem Fall tritt das erste Motiv hervor, das zweite, dunkle Motiv ist vor dem Hintergrund der dunklen Bildpunkte praktisch nicht sichtbar.

Betrachtet man das Sicherheitselement 180 umgekehrt aus einer Richtung 194, die innerhalb des Raumwinkelbereichs 186-2, aber außerhalb des Raumwinkelbereichs 186-1 liegt, so erscheinen die Bildpunkte 182-2 des zweiten Motivs hell und die Bildpunkte 182-1 des ersten Motivs dunkel, da die Bedingung für Retroreflexion dann nur für die zweiten Würfeleckelemente 184-2 erfüllt ist. In diesem Fall tritt somit das zweite Motiv hervor, während das erste, dunkle Motiv vor dem Hintergrund der dunklen Bildpunkte praktisch nicht sichtbar ist.

## Patentansprüche

1. Optisch variables Sicherheitselement (20) zur Absicherung von Wertgegenständen, mit einer achromatisch reflektierenden Mikrostruktur in Form eines Mosaiks (22) aus einer Vielzahl achromatisch reflektierender Mosaikelemente (26-1, 26-2), die durch die Parameter Größe, Umrissform, Reliefform, Reflexionsvermögen und räumliche Ausrichtung charakterisiert sind und die ein vorbestimmtes Motiv bilden, indem verschiedene Gruppen von Mosaikelementen (26-1, 26-2) mit unterschiedlichen charakteristischen Parametern einfallendes Licht (28) in unterschiedliche Raumbereiche reflektieren, bei dem die Mosaikelemente (26-1, 26-2) laterale Abmessungen von weniger als 30 µm und unterhalb der Auflösungsgrenze des menschlichen Auges aufweisen, und bei dem die Mosaikelemente als Reflexionsschichten Dünnschichtelemente mit Farbkippeffekt oder Schichten aus flüssigkristallinem Material aufweisen.

2. Sicherheitselement nach Anspruch 1, **dadurch gekennzeichnet, dass** die Mosaikelemente laterale Abmessungen von mehr als 3 µm, vorzugsweise von mehr als 10 µm aufweisen.

3. Sicherheitselement nach Anspruch 1 oder 2, **dadurch gekennzeichnet, dass** die Mosaikelemente eine quadratische, rechteckige, runde, ovale, wabenförmige oder polygonal begrenzte Umrissform aufweisen.

4. Sicherheitselement, nach wenigstens einem der Ansprüche 1 bis 3, **dadurch gekennzeichnet, dass** die lateralen Abmessungen der Mosaikelemente in keiner Richtung mehr als das Fünffache der Abmessung in einer der anderen Richtungen betragen.

5. Sicherheitselement nach wenigstens einem der Ansprüche 1 bis 4, **dadurch gekennzeichnet, dass** die Mosaikelemente als Reflexionsschichten Schichten aus cholesterischem flüssigkristallinem Material aufweisen.

6. Sicherheitselement nach wenigstens einem der Ansprüche 1 bis 5, **dadurch gekennzeichnet, dass** das Reflexionsvermögen der Mosaikelemente mithilfe von Mattstrukturen oder Mottenaugenstrukturen eingestellt ist.

7. Sicherheitselement nach wenigstens einem der Ansprüche 1 bis 6, **dadurch gekennzeichnet, dass** die Mosaikelemente eine Reliefform mit genau einer gegen die Oberfläche des Sicherheitselements geneigten Reflexionsfläche aufweisen.

8. Sicherheitselement nach Anspruch 7, **dadurch gekennzeichnet, dass** der Neigungswinkel der Reflexionsfläche der Mosaikelemente weniger als 90°, vorzugsweise weniger als etwa 45° beträgt.

9. Sicherheitselement nach Anspruch 7 oder 8, **dadurch gekennzeichnet, dass** die Reflexionsfläche der Mosaikelemente flach oder konkav oder konvex gewölbt ist.

10. Sicherheitselement nach wenigstens einem der Ansprüche 1 bis 6, **dadurch gekennzeichnet, dass** die Mosaikelemente eine Reliefform mit zwei oder mehr in verschiedene Richtungen gegen die Oberfläche des Sicherheitselements geneigten Reflexionsflächen aufweisen, wobei die Mosaikelemente insbesondere eine Dachstruktur oder eine mehrseitige pyramidale Struktur aufweisen.

11. Sicherheitselement nach Anspruch 10, **dadurch gekennzeichnet, dass** der Neigungswinkel der Reflexionsflächen der Mosaikelemente weniger als 90°, vorzugsweise weniger als etwa 45° beträgt.

12. Sicherheitselement nach Anspruch 10 oder 11, **dadurch gekennzeichnet, dass** die Reflexionsflächen der Mosaikelemente flach oder konkav oder konvex gewölbt sind.

13. Sicherheitselement nach wenigstens einem der Ansprüche 1 bis 6, **dadurch gekennzeichnet, dass** die Mosaikelemente Retroreflektoren bilden.

14. Sicherheitselement nach Anspruch 13, **dadurch gekennzeichnet, dass** die Mosaikelemente eine Würfeleckstruktur mit einer Reliefform aus drei im Wesentlichen aufeinander senkrecht stehenden und einander zugewandten Reflexionsflächen aufweisen.

15. Sicherheitselement nach Anspruch 14, **dadurch gekennzeichnet, dass** die durch die drei Reflexionsflächen definierte optische Achse jedes Mosaikelements in eine vorgewählte Richtung zeigt.

16. Sicherheitselement nach wenigstens einem der Ansprüche 1 bis 15, **dadurch gekennzeichnet, dass** das Mosaik ein Rasterbild aus einer Mehrzahl von Bildpunkten darstellt, wobei jeder Bildpunkt durch ein oder mehrere achromatisch reflektierende Mosaikelemente gebildet ist.

17. Sicherheitselement nach Anspruch 16, **dadurch gekennzeichnet, dass** die Helligkeit der Bildpunkte des Rasterbilds durch einen oder mehrere der Parameter Größe, Umrissform, Reliefform, Reflexionsvermögen und räumliche Ausrichtung der Mosaikelemente des jeweiligen Bildpunkts oder durch die Anzahl der Mosaikelemente mit bestimmten Parametern Größe, Umrissform, Reliefform, Reflexionsvermögen und räumliche Ausrichtung in dem jeweiligen Bildpunkt bestimmt ist.

18. Sicherheitselement nach Anspruch 16 oder 17, **dadurch gekennzeichnet, dass** in der Anordnung der Mosaikelemente innerhalb eines Bildpunktes eine weitere Information codiert ist.

19. Sicherheitselement nach wenigstens einem der Ansprüche 1 bis 18, **dadurch gekennzeichnet,**
- **dass** das Mosaik zwei oder mehr unterschiedliche Bildmotive in unterschiedliche Raumbereiche reflektiert, so dass für den Betrachter bei entsprechender Bewegung des Sicherheitselements ein Kipp- oder Bewegungsbild entsteht, oder
- **dass** das Mosaik eine sich vergrößernde oder verkleinernde Umrisslinie eines Bildmotivs in unterschiedliche Raumbereiche reflektiert, so dass für den Betrachter bei entsprechender Bewegung des Sicherheitselements ein Pumpbild entsteht, oder
- **dass** das Mosaik zumindest zwei Ansichten eines Bildmotivs in unterschiedliche Raumbereiche reflektiert, so dass für den Betrachter in einem vorgewählten Betrachtungsabstand ein Stereobild des Bildmotivs entsteht.

20. Sicherheitselement nach wenigstens einem der Ansprüche 1 bis 19, **dadurch gekennzeichnet, dass** die Parameter Größe, Umrissform, Reliefform, Reflexionsvermögen und räumliche Ausrichtung der Mosaikelemente so gewählt sind, dass eines oder alle der Motivbilder für den Betrachter bei ebener Ausrichtung des Sicherheitselements sichtbar sind und/oder dass eines oder alle der Motivbilder für den Betrachter erst bei einer vorgewählten Verformung des Sicherheitselements erscheinen und/oder dass eines oder alle der Motivbilder bei vorgewählter Beleuchtung auf eine Auffangfläche vorgewählter Geometrie projiziert werden.

21. Verfahren zum Herstellen eines Sicherheitselements nach wenigstens einem der Ansprüche 1 bis 20, bei dem das Oberflächenprofil der Mikrostruktur in eine Lackschicht (44) geprägt wird, und die geprägte Lackschicht (44) mit einer Reflexionsschicht (45) beschichtet wird, wobei als Reflexionsschicht (45) ein Dünnschichtelement mit Farbkippeffekt oder eine Schicht aus flüssigkristallinem Material aufgebracht wird.

22. Verfahren nach Anspruch 21, **dadurch gekennzeichnet, dass** die Reflexionsschicht durch eine transparente Deckschicht, beispielsweise eine UV-Lackschicht, abgedeckt wird.

23. Datenträger (10), insbesondere Wertdokument, wie Banknote, Ausweiskarte oder dergleichen, mit einem Sicherheitselement nach einem der Ansprüche 1 bis 20.

## Claims

1. An optically variable security element (20) for securing valuable articles, having an achromatically reflective micropattern in the form of a mosaic (22) composed of a plurality of achromatically reflective mosaic elements (26-1, 26-2) that are **characterized by** the parameters size, contour shape, relief shape, reflectivity and spatial orientation, and that form a predefined motif in that different groups of mosaic elements (26-1, 26-2) having different characteristic parameters reflect incident light (28) in different spatial regions, and in which the mosaic elements (26-1, 26-2) exhibit lateral dimensions of less than 30 µm and below the resolution limit of the human eye, and wherein as reflection layers, the mosaic elements comprise thin-layer elements having a color-shift effect or layers composed of liquid crystal material.

2. The security element according to claim 1, **characterized in that** the mosaic elements exhibit lateral dimensions of more than 3 µm, preferably of more than 10 µm.

3. The security element according to claim 1 or 2, **characterized in that** the mosaic elements exhibit a quadratic, rectangular, round, oval, honeycomb-shaped or polygonally delimited contour shape.

4. The security element according to at least one of claims 1 to 3, **characterized in that** in no direction are the lateral dimensions of the mosaic elements more than five times the dimension in one of the other directions.

5. The security element according to at least one of claims 1 to 4, **characterized in that,** as reflection layers, the mosaic elements comprise layers composed of cholesteric liquid crystal material.

6. The security element according to at least one of claims 1 to 5, **characterized in that** the reflectivity of the mosaic elements is adjusted with the aid of matte patterns or moth-eye patterns.

7. The security element according to at least one of claims 1 to 6, **characterized in that** the mosaic elements exhibit a relief shape having exactly one reflection area that is tilted against the surface of the security element.

8. The security element according to claim 7, **characterized in that** the tilt angle of the reflection area of the mosaic elements is less than 90°, preferably less than about 45°.

9. The security element according to claim 7 or 8, **characterized in that** the reflection area of the mosaic elements is flat or is concavely or convexly curved.

10. The security element according to at least one of claims 1 to 6, **characterized in that** the mosaic elements exhibit a relief shape having two or more reflection areas that are tilted in different directions against the surface of the security element, the mosaic elements especially exhibiting a roof structure or a multilateral pyramidal structure.

11. The security element according to claim 10, **characterized in that** the tilt angle of the reflection areas of the mosaic elements is less than 90°, preferably less than about 45°.

12. The security element according to claim 10 or 11, **characterized in that** the reflection areas of the mosaic elements are flat, or are concavely or convexly curved.

13. The security element according to at least one of claims 1 to 6, **characterized in that** the mosaic elements form retroreflectors.

14. The security element according to claim 13, **characterized in that** the mosaic elements exhibit a cube-corner structure having a relief shape composed of three reflection areas that stand substantially vertically on top of one another and facing one another.

15. The security element according to claim 14, **characterized in that** the optical axis of each mosaic element, defined by the three reflection areas, points in a prechosen direction.

16. The security element according to at least one of claims 1 to 15, **characterized in that** the mosaic constitutes a raster image composed of a plurality of pixels, each pixel being formed by one or more achromatically reflective mosaic elements.

17. The security element according to claim 16, **characterized in that** the brightness of the pixels of the raster image is determined by one or more of the parameters size, contour shape, relief shape, reflectivity and spatial orientation of the mosaic elements of the respective pixel.

18. The security element according to claim 16 or 17, **characterized in that** a further piece of information is encoded in the arrangement of the mosaic elements within a pixel.

19. The security element according to at least one of claims 1 to 18, **characterized in that**
- the mosaic reflects two or more different image motifs in different spatial regions such that, upon appropriate movement of the security element, a tilt or motion image is created for the viewer, or that
- the mosaic reflects a growing or shrinking contour line of an image motif in different spatial regions such that, upon appropriate movement of the security element, a pump image is created for the viewer, or that
- the mosaic reflects at least two views of an image motif in different spatial regions such that, at a prechosen viewing distance, a stereo image of the image motif is created for the viewer.

20. The security element according to at least one of claims 1 to 19, **characterized in that** the parameters size, contour shape, relief shape, reflectivity and spatial orientation of the mosaic elements are chosen such that, for a level orientation of the security element, one or all of the motif images are visible for the viewer, and/or that one or all of the motif images appear for the viewer only upon a prechosen deformation of the security element, and/ or that, upon prechosen illumination, one or all of the motif images are projected onto a collection area of a prechosen geometry.

21. A method for manufacturing a security element according to at least one of claims 1 to 20, in which the surface profile of the micropattern is embossed in a lacquer layer (44), and the embossed lacquer layer (44) is coated with a reflection layer (45), wherein as the reflection layer, a thin-layer element having a color-shift effect or a layer composed of liquid crystal material is applied.

22. The method according to claim 21, **characterized in that** reflection layer is covered by a transparent coating layer, for example a UV lacquer layer.

23. A data carrier (10), especially a value document, such as a banknote, identification card or the like, having a security element according to one of claims 1 to 20.

## Revendications

1. Elément de sécurité variable optiquement (20) pour la protection d'objets de valeur, avec une microstructure réfléchissante achromatique sous la forme d'une mosaïque (22) constituée d'une pluralité d'éléments de mosaïque réfléchissants achromatiques (26-1, 26-2) qui sont **caractérisés par** les paramètres de taille, forme du contour, forme du relief, pouvoir réfléchissant et d'alignement spatial et qui forment un motif prédéfini en ce que différents groupes d'éléments de mosaïque (26-1, 26-2) avec des paramètres caractéristiques différents réfléchissent de la lumière incidente (28) dans différentes zones spatiales, dans lequel les éléments de mosaïque (26-1, 26-2) présentent des dimensions latérales de moins de 30 µm et inférieure au seuil de résolution de l'oeil humain, et dans lequel les éléments de mosaïque présentent, en guise de couches de réflexion, des éléments de couche mince avec effet de changement de couleur ou des couches en matériau cristallin liquide.

2. Elément de sécurité selon la revendication 1, **caractérisé en ce que** les éléments de mosaïque présentent des dimensions latérales de plus de 3 µm, de préférence de plus de 10 µm.

3. Elément de sécurité selon la revendication 1 ou 2, **caractérisé en ce que** les éléments de mosaïque présentent une forme de contour carrée, rectangulaire, ronde, ovale, alvéolaire ou délimitée de manière polygonale.

4. Elément de sécurité selon l'une au moins des revendications 1 à 3, **caractérisé en ce que** les dimensions latérales des éléments de mosaïque ne présentent, dans aucune direction, pas plus de cinq fois la dimension dans l'une des autres directions.

5. Elément de sécurité selon l'une au moins des revendications 1 à 4, **caractérisé en ce que** les éléments de mosaïque présentent, en guise de couches de réflexion, des couches en matériau cristallin liquide cholestérique.

6. Elément de sécurité selon l'une au moins des revendications 1 à 5, **caractérisé en ce que** le pouvoir de réflexion des éléments de mosaïque est réglé à l'aide de structures mates ou de structures en forme d'oeil de mite.

7. Elément de sécurité selon l'une au moins des revendications 1 à 6, **caractérisé en ce que** les éléments de mosaïque présentent une forme en relief avec une surface de réflexion inclinée très précisément par rapport à la surface de l'élément de sécurité.

8. Elément de sécurité selon la revendication 7, **caractérisé en ce que** l'angle d'inclinaison de la surface de réflexion des éléments de mosaïque est de moins de 90°, de préférence de moins d'environ 45°.

9. Elément de sécurité selon la revendication 7 ou 8, **caractérisé en ce que** la surface de réflexion des éléments de mosaïque est plate ou bombée de manière concave ou convexe.

10. Elément de sécurité selon l'une au moins des revendications 1 à 6, **caractérisé en ce que** les éléments de mosaïque présentent une forme en relief avec deux ou davantage de surfaces de réflexion inclinées dans différentes directions par rapport à la surface de l'élément de sécurité, les éléments de mosaïque présentant en particulier une structure de toit ou une structure pyramidale à plusieurs côtés.

11. Elément de sécurité selon la revendication 10, **caractérisé en ce que** l'angle d'inclinaison des surfaces de réflexion des éléments de mosaïque est de moins de 90°, de préférence de moins d'environ 45°.

12. Elément de sécurité selon la revendication 10 ou 11, **caractérisé en ce que** les surfaces de réflexion des éléments de mosaïque sont plates ou bombées de manière concave ou convexe.

13. Elément de sécurité selon l'une au moins des revendications 1 à 6, **caractérisé en ce que** les éléments de mosaïque forment des rétroréflecteurs.

14. Elément de sécurité selon la revendication 13, **caractérisé en ce que** les éléments de mosaïque présentent une structure cubique avec une forme en relief constituée de trois surfaces de réflexion sensiblement disposées perpendiculairement les unes par rapport aux autres et se faisant face les unes les autres.

15. Elément de sécurité selon la revendication 14, **caractérisé en ce que** l'axe optique défini par les trois surfaces de réflexion de chaque élément de mosaïque pointe dans une direction présélectionnée.

16. Elément de sécurité selon l'une au moins des revendications 1 à 15, **caractérisé en ce que** la mosaïque représente une image tramée constituée d'une pluralité de points d'image, chaque point d'image étant formé par un ou plusieurs éléments de mosaïque de réflexion achromatique.

17. Elément de sécurité selon la revendication 16, **caractérisé en ce que** la luminosité des points d'image de l'image tramée est déterminée par un ou plusieurs des paramètres de taille, forme du contour, forme du relief, pouvoir de réflexion et d'alignement spatial des éléments de mosaïque du point d'image respectif, ou par le nombre d'éléments de mosaïque avec des paramètres définis de taille, forme du contour, forme du relief, pouvoir de réflexion et d'alignement spatial dans le point d'image respectif.

18. Elément de sécurité selon la revendication 16 ou 17, **caractérisé en ce qu'**une autre information est codée dans l'agencement des éléments de mosaïque à l'intérieur d'un point d'image.

19. Elément de sécurité selon l'une au moins des revendications 1 à 18, **caractérisé en ce que**
- la mosaïque réfléchit deux ou davantage de motifs d'image différents dans différentes zones spatiales de sorte que pour l'observateur, en cas d'un mouvement correspondant de l'élément de sécurité, une image à basculement ou mouvement est obtenue, ou
- **en ce que** la mosaïque réfléchit une ligne de contour s'agrandissant ou diminuant d'un motif d'image dans des zones spatiales différentes de sorte que pour l'observateur, en cas d'un mouvement correspondant de l'élément de sécurité, une image de pompage est obtenue, ou
- **en ce que** la mosaïque réfléchit au moins deux vues d'un motif d'image dans des zones spatiales différentes de sorte que pour l'observateur, à une distance d'observation présélectionnée, une image stéréo du motif d'image est obtenue.

20. Elément de sécurité selon l'une au moins des revendications 1 à 19, **caractérisé en ce que** les paramètres de taille, forme du contour, forme du relief, pouvoir de réflexion et d'alignement spatial des éléments de mosaïque sont sélectionnés de manière à ce que l'une des images à motif, ou toutes les images à motif sont visibles pour l'observateur en cas d'une orientation plane de l'élément de sécurité et/ou **en ce que** l'une des images à motif, ou toutes les images à motif apparaissent seulement pour l'observateur en cas d'une déformation présélectionnée de l'élément de sécurité et/ou **en ce que** l'une des images à motif, ou toutes les images à motif sont projetées sur une surface de récupération à géométrie présélectionnée en cas d'un éclairage présélectionné.

21. Procédé pour la fabrication d'un élément de sécurité selon l'une au moins des revendications 1 à 20, dans lequel le profil de surface de la microstructure est estampé dans une couche de vernis (44), et la couche de vernis (44) estampée étant enduite d'une couche de réflexion (45), un élément à couche mince avec effet de changement de couleur ou une couche en matériau cristallin liquide étant appliqué(e) en guise de couche de réflexion (45).

22. Procédé selon la revendication 21, **caractérisé en ce que** la couche de réflexion est recouverte par une couche de recouvrement transparente, par exemple une couche de vernis UV.

23. Support de données (10), en particulier document de valeur, tel un billet de banque, une carte d'identification ou similaire, avec un élément de sécurité selon l'une des revendications 1 à 20.
